# EUROPEAN PATENT SPECIFICATION

(11) **EP 4 564 917 B1**
(45) Date of publication and mention of the grant of the patent: **07.10.2026**
(21) Application number: 23862218.7
(22) Date of filing: 29.08.2023
(51) Int. Cl.: H04W 36/00, H04W 36/08

(54) **HANDOVER METHOD AND APPARATUS**
ÜBERGABEVERFAHREN UND -VORRICHTUNG
PROCÉDÉ ET APPAREIL DE TRANSFERT INTERCELLULAIRE

(30) Priority: 09.09.2022 CN 202211101844
(43) Date of publication of application: 04.06.2025
(73) Proprietor: Honor Device Co., Ltd., Shenzhen, Guangdong 518040 (CN)
(72) Inventor: SHAN, Baokun, Shenzhen, Guangdong 518040 (CN)
(74) Representative: Gill Jennings & Every LLP
(86) International application number: PCT/CN2023/115443
(87) International publication number: WO 2024/051523

(56) References cited:
- WO-A1-2021/179139
- WO-A1-2021/179139
- WO-A1-2021/194677
- US-A1- 2018 192 335
- US-A1- 2022 287 099
- US-A1- 2023 015 847
- PANASONIC: "RNTI assignment and random access procedures", 3GPP DRAFT; R1-082414, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Warsaw, Poland; 20080624, 24 June 2008 (2008-06-24), XP050110694
- ASUSTEK: "Discussion on Random Access Preamble selection for Handover", vol. RAN WG2, no. Busan, Korea; 20180521 - 20180525, 10 May 2018 (2018-05-10), XP051463919, Retrieved from the Internet <URL:http://www.3gpp.org/ftp/tsg%5Fran/WG2%5FRL2/TSGR2%5F102/Docs> [retrieved on 20180510]
- QUALCOMM INCORPORATED: "Latency reduction enhancements for SCG RACH procedure", 3GPP TSG RAN WG2 MEETING #107BIS R2-1913161, 4 October 2019 (2019-10-04), XP051791176

## Description

### TECHNICAL FIELD

This application relates to the field of mobile communications technologies, and in particular, to a handover method and apparatus.

### BACKGROUND

In a cellular communication network system, a plurality of cells (cells) of a plurality of base stations cover a geographical range and provide a wireless communication service. User equipment (User Equipment, UE) usually performs a communication service in only one cell at a same moment. Handover (Handover) may occur when UE that is performing a service moves or a wireless environment changes greatly. The handover may be understood as a process of handing over the UE from one cell to another cell under control of a network.

How to optimize a handover procedure is one of problems that need to be researched. US 2023/015847 A1 discloses a method including releasing configured uplink grant resources after handover completion. PANASONIC: "RNTI assignment and random access procedures", 3GPP DRAFT; R1-082414, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Warsaw, Poland; 20080624, 24 June 2008 discloses RNTI assignment and random access procedures during LTE handover and data resumption scenarios.

### SUMMARY

This application provides a handover method and apparatus, to resolve a problem of how to optimize a handover procedure.

To achieve the foregoing objective, this application provides the following technical solutions.

A first aspect of this application provides a handover method, applied to user equipment UE handing over to a target according to the disclosure of independent claim 1

A second aspect of this application provides a base station according to the disclosure of independent claim 5, including: a memory configured to store a program, and one or more processors configured to run the program to implement the handover method according to the first aspect of this application.

A third aspect of this application provides a computer-readable storage medium according to the disclosure of independent claim 6, storing a program, where the handover method according to the first aspect, when a base station runs the application program.

### BRIEF DESCRIPTION OF DRAWINGS

FIG. 1 is an example diagram of handover of a mobile phone during a call;
FIG. 2 is a flowchart of a handover method according to an embodiment of this application;
FIG. 3 is an example flowchart of accessing a target cell by UE in a handover method according to an embodiment of this application;
FIG. 4 is another example flowchart of accessing a target cell by UE in a handover method according to an embodiment of this application;
FIG. 5 is another example flowchart of accessing a target cell by UE in a handover method according to an embodiment of this application; and
FIG. 6 is a flowchart of another handover method according to an embodiment of this application.

### DESCRIPTION OF EMBODIMENTS

The following clearly and completely describes technical solutions in embodiments of this application with reference to the accompanying drawings in the embodiments of this application. Terms used in the following embodiments are only intended to describe particular embodiments, and are not intended to limit this application. As used in this specification and the claims of this application, a singular expression form, "one", "a ", "said", "foregoing", "the", or "this", is intended to also include an expression form such as "one or more", unless clearly indicated to the contrary in the context. It should be further understood that in the embodiments of this application, "one or more" means one, two, or more. The term "and/or" describes an association relationship between associated objects and represents that three relationships may exist. For example, A and/or B may represent: Only A exists, both A and B exist, and only B exists. A and B may be singular or plural. The character "/" generally indicates an "or" relationship between the associated objects.

Reference of "one embodiment", "some embodiments", or the like described in the specification means that a specific feature, structure, or characteristic described with reference to the embodiment is included in one or more embodiments of this application. Therefore, statements "in an embodiment", "in some embodiments", "in other embodiments", "in further embodiments", and the like appearing in different parts of this specification do not necessarily refer to a same embodiment, but mean "one or more but not all embodiments", unless otherwise specified in other ways. The terms "include", "contain", "have", and variations thereof all mean "including but not limited to", unless otherwise specified in other ways.

"A plurality of" involved in the embodiments of this application means being greater than or equal to two. It should be noted that, in descriptions of the embodiments of this application, terms such as "first" and "second" are merely used for a purpose of distinguishing the descriptions and should not be construed as indicating or implying relative importance, nor as indicating or implying a sequence.

The embodiments of this application are applied to a communication system, which may be a second generation (2G) communication system, a third generation (3G) communication system, a long term evolution (long term evolution, LTE) system, a fifth generation (5G) communication system, a hybrid architecture of LTE and 5G, a 5G new radio (5G New Radio, 5G NR) system, a new communication system that appears in future communication development, or the like.

In the embodiments provided in this application, a base station may be any device that is located on a network side and that has a radio transceiver function, including but not limited to: an evolved NodeB (NodeB or eNB or e-NodeB, evolutional Node B) in long term evolution (long term evolution, LTE), a gNodeB (gNodeB or gNB) or a transmission/reception point (transmission receiving point/transmission reception point, TRP) in new radio (new radio, NR), a 3GPP subsequent evolved base station, an access node in a Wi-Fi system, a wireless relay node, a wireless backhaul node, and the like. The base station may be: a macro base station, a micro base station, a pico base station, a small station, a relay station, a balloon station, or the like. The base station may include one or more intra-base-station or inter-base-station transmission/reception points (Transmission Reception Point, TRP). The base station may alternatively be a wireless controller in a cloud radio access network (cloud radio access network, CRAN) scenario, a centralized unit (centralized unit, CU), and/or a distributed unit (distributed unit, DU). The base station may communicate with a terminal, or may communicate with the terminal through a relay station. The terminal may communicate with a plurality of base stations of different technologies. For example, the terminal may communicate with a base station supporting an LTE network, or may communicate with a base station supporting a 5G network, or may perform dual connectivity with a base station supporting an LTE network and a base station supporting a 5G network.

In the embodiments provided in this application, the terminal may be in various forms, for example, a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), an in-vehicle terminal device, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal device, or the like. The terminal sometimes may also be referred to as a terminal device, user equipment (user equipment, UE), an access terminal device, an in-vehicle terminal, an industrial control terminal, a UE unit, a UE station, a mobile station, a console, a remote station, a remote terminal device, a mobile device, a UE terminal device, a wireless communication device, a UE agent, a UE apparatus, or the like. The terminal may alternatively be a fixed terminal or a mobile terminal. In the following embodiments of this application, as an example, the terminal is UE.

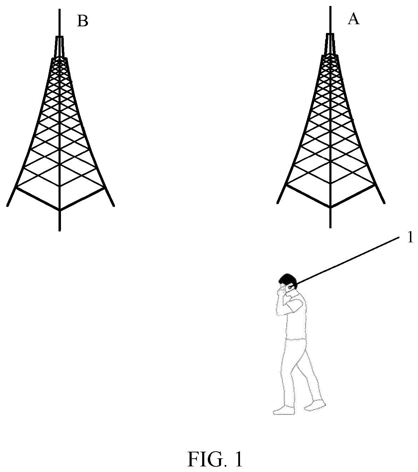

FIG. 1 is an example in which a mobile phone is handed over between cells. A user is making a call by using a mobile phone 1, and the mobile phone 1 performs a voice call service by using a cell of a base station A. As the user moves, a signal of the cell of the base station A becomes worse, and a handover procedure is triggered. It is assumed that a cell of a base station B is a target cell, and the mobile phone is handed over to the target cell of the base station B through the handover procedure.

A problem of a high delay may occur in a conventional handover procedure, and a relatively high delay may cause interruption of a service. Still using FIG. 1 as an example, a delay is relatively high for a mobile phone 1 to be handed over from a cell of a base station A to a cell of a base station B. In other words, the mobile phone 1 is not handed over to the cell of the base station B in a timely manner, but as a user moves, a signal of the cell of the base station A may be worse. Therefore, interruption of a voice service may be caused.

In addition, the conventional handover procedure further has a problem of large overheads.

In a research process, the inventor finds that a random access procedure in the handover procedure is one of reasons for a high delay and high overheads:

With reference to the existing handover procedure, after obtaining information about a target cell at a handover preparation stage, UE needs to access the target cell (through a generalized random access procedure, which is briefly referred to as an "access procedure" below) at a handover stage, that is, initiates the access procedure at the target cell. After the access procedure is completed and the UE accesses the target cell, the UE sends a handover complete message to a target base station, to complete a handover (that is, air interface handover) procedure between the UE and the base station. However, the access procedure includes a plurality of interaction processes of uplink and downlink signaling, resulting in a delay and signaling overheads. Therefore, the access procedure is one of reasons for a relatively high delay and relatively large overheads of the handover procedure.

To resolve the foregoing problem, the inventor finds through research that the handover complete message has a relatively small data volume, so that the handover complete message can be transmitted to the target cell in the random access procedure. Alternatively, in a case that uplink synchronization is not required, the handover complete message is transmitted, by using a preconfigured uplink resource, to the target cell in a procedure of accessing the target cell by the UE, to reduce a delay in the handover procedure and reduce overheads in the handover procedure.

For ease of description, due to the relatively small data volume of the handover complete message, random access for transmitting the handover complete message is referred to as "random access based on improved small data transmission", and the procedure of transmitting the handover complete message by using the preconfigured uplink resource is referred to as "improved small data transmission based on a preconfigured resource (Configured Grant, CG)". For ease of description, the "random access based on improved small data transmission" and the "improved small data transmission based on a CG" are collectively referred to as "improved small data transmission". Handover including the "improved small data transmission" is referred to as "improved handover".

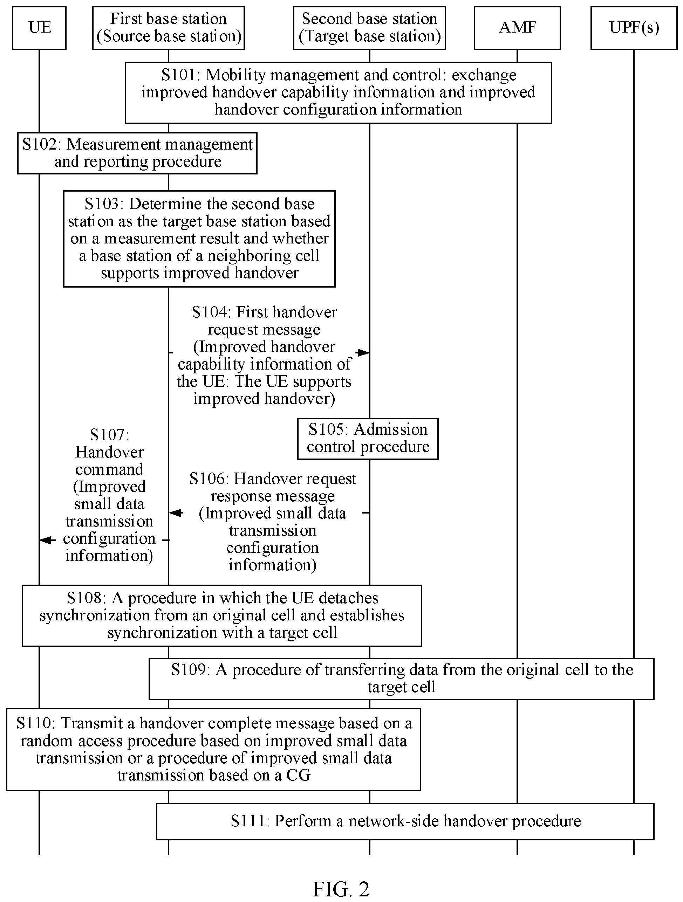

FIG. 2 is a flowchart of a handover method according to an embodiment of this application. In FIG. 2, a first base station and a second base station are wireless network devices. An access and mobility management function (Access and Mobility Management Function, AMF) and a user plane function (User Plane Function, UPF) are core network devices.

In FIG. 2, it is assumed that the first base station is a source base station, and before UE is handed over, a cell of the source base station is used to perform a service. It is assumed that the second base station is a base station to which a target cell selected through the following procedure belongs, and is referred to as a target base station. In the procedure shown in FIG. 2, the source base station and the target base station may be a same base station, or may be different base stations.

FIG. 2 includes the following steps:
S101: A network side performs a mobility management procedure.

In this embodiment, the mobility management procedure includes: exchanging information between base stations.

In some implementations, the information includes improved handover capability information. The improved handover capability information indicates whether improved handover is supported. For example, if the improved handover capability information is "1", it indicates that improved handover is supported, or if the improved handover capability information is "0", it indicates that improved handover is not supported.

It may be understood that the improved handover capability information is an explicit expression of whether the base station supports a capability of improved handover.

In some other implementations, the information includes improved handover configuration information. The improved handover configuration information represents information about a resource for improved small data transmission, and indicates that the base station has a capability of improved handover. That is, whether the base station supports improved handover can be implicitly expressed by using the improved handover configuration information.

The foregoing two manners both indicate that the base station supports improved handover. In FIG. 2, the first manner is used as an example.

The information may further include adjacency relationship information between a base station and a cell, used for subsequent mobility configuration for the UE.

It may be understood that, the base stations may directly exchange information, or may exchange information through the AMF. This is not limited herein. In addition, other steps in the mobility management procedure are not described in detail herein.

S102: UE and a source base station perform a measurement management and reporting procedure.

In some implementations, the source base station sends a radio resource control reconfiguration (Radio Resource Control Reconfiguration, RRCReconfiguration) message to the UE. The RRCReconfiguration message carries measurement configuration information. The measurement configuration information mainly includes a measurement trigger condition (for example, various signal thresholds for starting measurement), a measurement range (for example, a cell list and a frequency list), a time interval for measurement, and the like.

During a service, the UE continuously evaluates whether the measurement trigger condition is satisfied, and if the measurement trigger condition is satisfied (which is usually a case in which a serving cell signal becomes worse), the UE performs measurement and sends a measurement result to the source base station.

S103: The source base station determines a target cell from neighboring cells based on a measurement result and whether the neighboring cells support improved handover.

It may be understood that, the source base station determines, by using the information exchanged in S101, whether a base station of the neighboring cell supports improved handover.

An alternative step of S103 is: The source base station determines the second base station as the target base station based on a measurement result and whether the UE and the base station of the neighboring cell support improved handover. In this case, whether the UE supports improved handover is determined based on indication information of whether the UE supports improved handover. The indication information of whether the UE supports improved handover may be explicit capability information, for example, access stratum radio capability (AS radio capability, Access Stratum radio capability) information or non-access stratum capability (NAS capability, Non-Access Stratum capability) information that indicates whether the UE supports improved handover, or may be other information that may indicate whether the UE supports improved handover, for example, whether the UE supports improved small data transmission, or a protocol version number supported by the UE. This is not limited herein. The base station may obtain the indication information from the UE in a connected mode, or may obtain the indication information from a core network in an RRC link setup process of the UE or in an RRC link state.

In some implementations, if (at least one) cell of the second base station supports improved handover, signal strength of the cell in the measurement result is greater than a preset threshold, and the UE supports improved handover, the second base station is determined as the target base station.

S104: The source base station sends a first handover request message to a target base station.

The first handover request message carries improved handover capability information of the UE. The first handover request message further carries information (such as an ID) of UE serving as a terminal to be handed over and other related information.

In this embodiment, as an example, the improved handover capability information of the UE indicates that the UE supports improved handover.

S105: The target base station performs an admission control procedure in response to the first handover request message.

In some implementations, the admission control procedure includes: determining, based on that the improved handover capability information of the UE indicates that the UE supports improved handover and that load of the target base station allows the UE to be handed over, that the UE is allowed to be handed over.

S106: The target base station transmits a handover request response message to the source base station in a case in which the UE is allowed to be handed over.

The handover request response message carries improved small data transmission configuration information, and the improved small data transmission configuration information may be understood as: information indicating resources and parameters used for improved small data transmission.

In some implementations, the improved small data transmission configuration information includes information about resources and parameters for random access based on improved small data transmission.

The random access includes 4-step (step) random access and 2-step random access. Therefore, an example of the improved small data transmission configuration information is: 4-step random access preamble information (for example, a preamble or an index of a preamble), and information about a time-frequency resource for transmitting the 4-step random access preamble information. Another example of the improved small data transmission configuration information is: 2-step random access preamble information (for example, a preamble or an index of a preamble), information about a time-frequency resource for transmitting the 2-step random access preamble information, and information about a resource for sending a physical uplink shared channel (Physical Uplink Shared Channel, PUSCH) used by an MsgA.

In some implementations, to distinguish between the random access that carries the handover complete message in this procedure and conventional random access, the foregoing preamble information indicates the random access for transmitting the handover complete message. That is, at least one of content (such as a value) and a format (such as a length) of the preamble information is different from conventional preamble information that indicates random access.

In terms of dimensions of two types of random access: contention-based random access and non-contention-based random access, the foregoing preamble information may represent a type of preamble. That is, in addition to representing the random access carrying the handover complete message, the preamble information can further represent a preamble used for random access. That is, in this step, random access to be performed is configured as the non-contention-based random access. Alternatively, the foregoing preamble information may not represent any type of preamble. To be specific, the preamble information represents only the random access carrying the handover complete message. That is, in this step, random access to be performed is configured as the contention-based random access.

As described above, the target base station and the source base station are a same base station, that is, handover is performed between cells of the same base station. In this case, uplink synchronization with the base station no longer needs to be performed. Therefore, random access may not be performed, but only the handover complete message is transmitted to the base station based on the improved small data transmission based on a CG.

Therefore, in some other implementations, the improved small data transmission configuration information includes information about an uplink transmission resource used for transmission of a handover complete message. Examples of the uplink transmission resource include: a radio network temporary identifier (Radio Network Temporary Identifier, RNTI) specifically used for improved handover (which may be the same as or different from a C-RNTI carried in the conventional handover procedure), time-frequency information of an uplink resource, a size of an uplink transport block, and the like. That is, in a case in which the target base station and the source base station are the same base station, the UE transmits the handover complete message to the target cell by using small data transmission based on a CG.

In addition to the improved small data transmission configuration information, the handover request response message may further carry configuration information required by the UE to access the target cell, such as a cell radio network temporary identifier (Cell RNTI, C-RNTI).

S107: The source base station sends a handover command to the UE.

The handover command includes the improved small data transmission configuration information.

In some implementations, the handover command is carried in an RRCReconfiguration message to be transmitted to the UE. In some other implementations, the handover command is carried in media access control control signaling (Media Access Control, Control Element, MAC CE) to be transmitted to the UE. The MAC CE is signaling that is more bottom-layer, and therefore, has a lower transmission delay.

The handover signaling is used to trigger the UE to perform a handover procedure. Therefore, the handover command further includes information (such as an ID) of the target cell and related configuration information of the target cell.

S108: Perform a procedure in which the UE detaches synchronization from the source cell and establishes synchronization with the target cell.

S109: Perform a procedure of transferring data from the source cell to the target cell.

Specific steps of S108 and S109 are not described herein again.

S110: The UE performs, in the target cell, a random access procedure based on improved small data transmission or a procedure of improved small data transmission based on a CG.

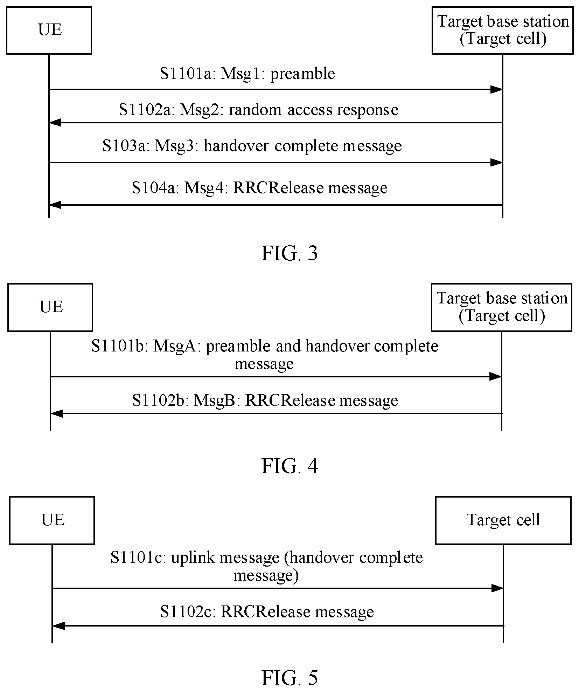

In some implementations, a specific implementation of S110 is shown in FIG. 3:
S1101a: The UE sends a message (Message, Msg) 1 including a preamble (or an index of the preamble) to the target cell, to trigger the random access procedure. The preamble and a resource used for sending the preamble are both indicated by the improved small data transmission configuration information received by the UE in S107.

As described above, the preamble is a preamble specifically used for random access in improved handover, to prompt the base station to provide a larger uplink scheduling grant (Uplink grant, UL grant), to add the handover complete message to an uplink message of the random access procedure.

To reduce a handover delay, the UE should perform S1101a as early as possible. For example, the UE performs S1101a in a first available random access channel slot (Random Access Channel occasion, RACH occasion) after reception of the handover command. For another example, after the UE receives the handover command, S1101a is performed no later than an N^{th} available RACH occlusion, where N is an integer, and may be configured by a network device, or may be agreed on in a protocol.

S1102a: The target cell sends an Msg2 including a random access response (Random access response, RAR) to the UE.

The RAR carries information about a UL grant used for sending an Msg3. As described above, the UL grant used for sending the Msg3 is greater than a UL grant in a conventional random access and handover procedure, so that the handover complete message is added to an uplink message of the random access procedure.

S1103a: The UE sends, based on a UL grant, an Msg3 including a handover complete message to the target cell.

In some implementations, a type of the handover complete message is an RRC message, such as a radio resource control reconfiguration complete (Radio Resource Control Reconfiguration Complete, RRCReconfigurationComplete) message. In some other implementations, a type of the handover complete message is a message type that is more bottom-layer, for example, a MAC CE indicating handover completion. Using a more bottom-layer message has advantages of a lower processing delay and lower overheads.

It may be understood that in addition to the foregoing information, the Msg1 to the Msg3 may further include other information in the random access procedure, and details are not described herein.

FIG. 3 shows a procedure of transmitting a handover complete message based on 4-step random access. The procedure further includes an Msg4. A message included in the Msg4 is not limited herein. For commonality with the existing 4-step random access and a procedure related thereto (for example, a small data transmission (SDT) procedure), an example of the Msg4 is an RRC release (RRCRelease) message. However, it may be understood that, because the UE is still performing a service when step S110 is performed, the RRCRelease message is not suitable for transmission in S110, but is transmitted on a suitable occasion after the service has been performed.

Alternatively, after S1103a, the target base station performs S1104a (as shown in FIG. 3), that is, transmits an RRCRelease message to the UE. However, the RRCRelease message does not indicate to release RRC, that is, the UE does not release an RRC connection after receiving the RRCRelease message.

Alternatively, an RRC message that represents RRC connection resumption (such as an RRCResume message) or that represents RRC connection setup (such as an RRCSetup message) or a MAC CE may be transmitted in S1104a.

In some other implementations, a specific implementation of S110 is shown in FIG. 4.

S1101b: The UE sends, to the target cell, an MsgA including a preamble and a handover complete message, where resources used for sending the MsgA are all indicated by the improved small data transmission configuration information received by the UE in S107. For a type of the handover complete message, refer to S1103a.

To reduce a handover delay, the UE should perform S1101b as early as possible. For an execution occasion, refer to an execution occasion of S1101a. For a type of the handover complete message, refer to S1103a.

FIG. 4 shows a procedure of transmitting a handover complete message based on 2-step random access. The procedure further includes an MsgB. A message included in the MsgB is not limited herein. For consistency with the existing 2-step random access and a procedure related thereto (for example, a small data transmission (SDT) procedure), an example of the MsgB is an RRC release (RRCRelease) message. However, it may be understood that, because the UE is still performing a service when step S110 is performed, the RRCRelease message is not suitable for transmission in S110, but is transmitted on a suitable occasion after the service has been performed.

Alternatively, after S1101b, the target base station performs S1102b (as shown in FIG. 4), that is, transmits an RRCRelease message to the UE. However, the RRCRelease message does not indicate to release RRC, that is, the UE does not release an RRC connection after receiving the RRCRelease message.

Alternatively, an RRC message that represents RRC connection resumption (such as an RRCResume message) or that represents RRC connection setup (such as an RRCSetup message) or a MAC CE may be transmitted in S1104a.

It may be understood that the random access procedure in FIG. 3 and FIG. 4 may be a contention-based random access procedure, or may be a non-contention-based random access procedure.

As described above, when handover is performed between cells of a same base station, uplink synchronization does not need to be performed with the base station to which the target cell belongs. Therefore, step S104 and step S105 may be skipped. Instead, after S103, S105 is performed, and after S105, S107 and subsequent steps are performed, to further reduce the delay and reduce the signaling overheads.

In addition, in still other implementations, a specific implementation of S110 is shown in FIG. 5: S1101c: The UE sends an uplink message including a handover complete message to the target cell. An objective of the uplink message is to access the target cell and transmit the handover complete message to the target cell. An example of the uplink message is a radio resource control resume request (Radio Resource Control Resume Request, RRCResumeRequest) message. However, it may be understood that, because the UE and the base station are in RRC connected mode in the handover procedure, a function of the RRCResumeRequest message is merely to carry the handover complete message instead of indicating to resume the RRC connection. That is, the target cell only obtains the handover complete message from the RRCResumeRequest message, but does not respond with an operation for the RRC connection.

The uplink message may alternatively be of another type. This is not limited herein.

To reduce a handover delay, the UE should perform S1101c as early as possible. For example, the UE performs S1101c on a first available CG resource. For another example, the UE performs S1101c no later than an N^{th} available CG resource, where N is an integer, and may be configured by a network device, or may be agreed on in a protocol.

It may be understood that, the UE transmits the uplink message by using the uplink transmission resource transmitted in S106.

In some implementations, after S1101c, a step of transmitting, by the target cell, a downlink message to the source cell is further performed. The downlink message may be an RRCRelease message. However, it may be understood that when step S110 is performed, the UE is still performing a service. Therefore, the RRCRelease message is not suitable for transmission in S110, but is transmitted on a suitable occasion after the service has been performed.

Alternatively, after S1101c, the target base station performs S1102c (as shown in FIG. 5), that is, transmits an RRCRelease message to the UE. However, the RRCRelease message does not indicate to release an RRC connection, that is, the UE does not release the RRC connection after receiving the RRCRelease message.

Alternatively, an RRC message that represents RRC connection resumption (such as an RRCResume message) or that represents RRC connection setup (such as an RRCSetup message) or a MAC CE may be transmitted in S1104a.

After the random access procedure is completed, the target cell sends a handover success message to the source cell, and the source cell sends SN STATUS TRANSFER to the target cell.

After S110 is performed, it may be considered that the handover between the UE and the base station (that is, an air interface) is completed.

S111: Perform a network-side handover procedure.

It may be understood that the network-side handover procedure is completed by exchanging data among the network side device, the source base station, the target base station, the AMF, and the UPF. Details are not described herein.

It can be learned from the procedure shown in FIG. 2 that, the UE transmits the handover complete message to the target cell through improved small data transmission. In one case, the improved small data transmission is performed in the random access procedure. In another case, the improved small data transmission is implemented based on a CG. Both a delay and overheads of handover can be reduced. The reduction of the delay can reduce a possibility of service interruption caused by an excessively long handover delay.

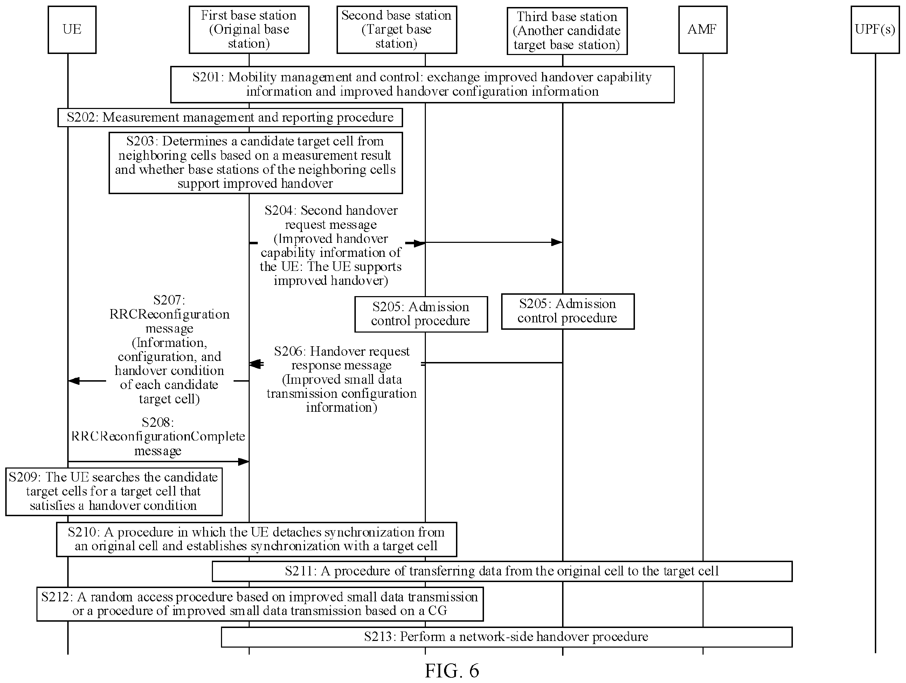

FIG. 6 shows another handover method according to an embodiment of this application. A difference from FIG. 2 lies in that a handover procedure shown in FIG. 4 is a conditional handover procedure, to resolve a problem that when UE moves excessively fast, quality of a network degrades excessively fast, resulting in service interruption caused by disconnection of the UE from the network.

FIG. 6 includes the following steps:
S201: A network side performs a mobility management procedure. For details, refer to S101, which is not described herein again.
S202: UE and a source base station perform a measurement management and reporting procedure. For details, refer to S102, which is not described herein again.
S203: The source base station determines candidate target cells from neighboring cells based on a determining condition.

In this step, the determining condition includes a measurement result, and may further include whether the neighboring cell supports improved handover, and the like. It may be understood that, the candidate target cell obtained through determining based on the determining condition may support improved handover or may not support improved handover.

It may be understood that, there is at least one candidate target cell. In FIG. 6, as an example, at least one cell of a second base station and at least one cell of a third base station are candidate target cells. A base station to which a candidate cell belongs is referred to as a candidate target base station.

For a specific determining manner, refer to S103.

S204: The source base station sends a second handover request message to a candidate target base station.

The second handover request message carries improved handover capability information of the UE. The second handover request message further carries information (such as an ID) of UE serving as a terminal to be handed over and other related information.

In this embodiment, as an example, the improved handover capability information of the UE indicates that the UE supports improved handover.

It may be understood that, the second handover request message and the first handover request message may both indicate improved handover. Alternatively, the first handover request indicates an improved handover procedure shown in FIG. 2, and the second handover request indicates the improved conditional handover procedure described in this embodiment (that is, shown in FIG. 6).

S205: The candidate target base station performs an admission control procedure in response to the second handover request.

For a specific implementation of an admission control procedure of any candidate target base station, refer to S105.

S206: The candidate target base station transmits a handover request response message to the source base station in a case in which the UE is allowed to be handed over.

The handover request response message carries improved small data transmission configuration information. For specific content of the improved small data transmission configuration information, refer to S106. The handover request response message may further carry configuration information required by the UE to access the target cell, such as a C-RNTI.

As described above, the candidate target cell obtained through determining based on the determining condition may support improved handover or may not support improved handover. Therefore, only handover request response messages sent by some candidate target base stations may carry transmission configuration information.

S207: The source base station sends an RRCReconfiguration message to the UE.

The RRCReconfiguration message carries information (such as an ID) of each candidate target cell, a handover-related configuration of each candidate target cell, and a handover condition (such as a signal strength measurement threshold) for handover to each candidate target cell.

S208: The UE sends an RRCReconfigurationComplete message to the source base station.

The RRCReconfigurationComplete message represents successful reception of the RRCReconfiguration message.

S209: The UE searches, based on the RRCReconfiguration message, the candidate target cells for a cell that satisfies a handover condition, as a target cell.

A target candidate cell that satisfies the handover condition is referred to as the target cell.

In some implementations, the handover condition includes a condition related to improved small data transmission (that is, improved handover). In addition, a priority of each condition in the handover condition can be set, to improve a degree of impact of some conditions on selection of the target cell.

In some other implementations, the UE preferentially selects a target cell from candidate target cells supporting improved handover.

S210: A procedure in which a UE detaches synchronization from the source cell and establishes synchronization with the target cell.

S211: Perform a procedure of transferring data from the source cell to the target cell.

S212: The UE performs a random access procedure in the target cell.

For a specific implementation, refer to S110, that is, as shown in FIG. 3, FIG. 4, or FIG. 5.

After the random access procedure is completed, the target cell sends a handover success message to the source cell, and the source cell sends SN STATUS TRANSFER and a handover cancellation message to the target cell.

S213: Perform a network-side handover procedure.

In the handover procedure shown in FIG. 6, improved small data transmission is integrated during the conditional handover, to reduce a delay and overheads of handover.

It can be learned with reference to FIG. 3, FIG. 4, and FIG. 5 that the improved small data transmission provided in the embodiments of this application may have the following features:

A step of determining a size of a data packet is not performed. This is because for the scenario of handover, a data volume of the handover complete message is usually relatively small. Therefore, whether a condition for a small data packet is satisfied does not need to be determined.

A step of determining signal strength of a cell is not performed. This is because for the scenario of handover, the target cell is a cell that is determined based on signal measurement and that has a relatively good signal. In other words, there is a high probability that the target cell has a relatively good signal. Therefore, the signal of the target cell does not need to be determined.

Based on the foregoing features, the improved small data transmission provided in the embodiments of this application can reduce measurement threshold determining and data volume determining, thereby reducing procedure complexity and reducing overheads.

## Claims

1. A handover method, applied to a base station to which a target cell performing a handover procedure belongs, wherein the method comprises:
sending (S106) configuration information in response to handover of user equipment UE from a source cell to the target cell being triggered, wherein the configuration information indicates to transmit a handover complete message in a procedure of accessing the target cell;
wherein the configuration information comprises:
random access preamble information and information about a resource for transmitting the random access preamble information, wherein
the random access preamble information is specifically used for indicating to transmit the handover complete message in the procedure of accessing the target cell;
**characterized in that** before the sending configuration information, the method further comprises:
exchanging information with the base station to which the source cell belongs, wherein the information comprises capability information or configuration information, and the capability information or the configuration information indicates support of transmitting the handover complete message in the procedure of accessing the target cell; or
determining, in an admission control procedure based on capability information of the UE, that the UE is allowed to be handed over, where the capability information indicates support of transmitting the handover complete message in the procedure of accessing the target cell.

2. The method according to claim 1, wherein the configuration information comprises:
information about a preconfigured uplink transmission resource;
wherein the information about the uplink transmission resource comprises:
a radio network temporary identifier specifically used for transmission of the handover complete message in the procedure of accessing the target cell, time-frequency information used for uplink transmission, and information about an uplink transport block.

3. The method according to claim 1 or 2, wherein the handover from a source cell to the target cell being triggered comprises:
receiving a handover request message sent by a base station to which the source cell belongs; and
the sending configuration information comprises:
sending a handover response message to the base station to which the source cell belongs, wherein the handover response message carries the configuration information.

4. The method according to claim 1 or 2, wherein the source cell and the target cell belong to the same base station; and
the handover from a source cell to the target cell being triggered comprises:
receiving a measurement result sent by the UE; and
the sending configuration information comprises:
sending a message that carries the configuration information to the UE, wherein the message comprises a radio resource control reconfiguration RRCReconfiguration message or media access control signaling MAC CE.

5. A base station comprising:
a memory, configured to store a program; and
one or more processors, configured to run the program to implement the handover method according to any one of claims 1 to 4.

6. A computer-readable storage medium, storing a program, where the handover method according to any one of claims 1 to 4 is implemented when a base station runs the program.

## Patentansprüche

1. Übergabeverfahren, das auf eine Basisstation angewendet wird, zu der eine Zielzelle gehört, die ein Übergabeverfahren durchführt, wobei das Verfahren umfasst:
Senden (S106) von Konfigurationsinformationen als Reaktion auf die Auslösung einer Übergabe eines Benutzergeräts (UE) von einer Quellzelle an die Zielzelle, wobei die Konfigurationsinformationen die Übertragung einer Übergabeabschlussnachricht in einem Verfahren zum Zugriff auf die Zielzelle angeben;
wobei die Konfigurationsinformationen umfassen:
Informationen zur Direktzugriffs-Präambel und Informationen ü ber eine Ressource zur Übertragung der Informationen zur Direktzugriffs-Präambel, wobei
die Informationen zur Direktzugriffs-Präambel speziell dazu verwendet werden, die Übertragung der Übergabeabschlussnachricht im Verfahren zum Zugriff auf die Zielzelle anzugeben;
**dadurch gekennzeichnet, dass** das Verfahren vor dem Senden der Konfigurationsinformationen ferner umfasst:
Austauschen von Informationen mit der Basisstation, zu der die Quellzelle gehört, wobei die Informationen Fähigkeitsinformationen oder Konfigurationsinformationen umfassen, und die Fähigkeitsinformationen oder die Konfigurationsinformationen die Unterstützung der Übertragung der Übergabeabschlussnachricht im Verfahren zum Zugriff auf die Zielzelle angeben; oder
Bestimmen in einem Zulassungssteuerungsverfahren basierend auf Fähigkeitsinformationen des UE, dass die Übergabe des UE zulässig ist, wobei die Fähigkeitsinformationen die Unterst ü tzung der Übertragung der Übergabeabschlussnachricht im Verfahren zum Zugriff auf die Zielzelle angeben.

2. Verfahren nach Anspruch 1, wobei die Konfigurationsinformationen umfassen:
Informationen über eine vorkonfigurierte Uplink-Übertragungsressource;
wobei die Informationen über die Uplink-Übertragungsressource umfassen:
eine temporäre Funknetz-Identität, die speziell für die Übertragung der Übergabeabschlussnachricht im Verfahren zum Zugriff auf die Zielzelle verwendet wird, Zeit-Frequenz-Informationen, die für die Uplink-Übertragung verwendet werden, sowie Informationen über einen Uplink-Transportblock.

3. Verfahren nach Anspruch 1 oder 2, wobei die ausgelöste Übergabe von einer Quellzelle zu einer Zielzelle umfasst:
Empfangen einer Übergabeanforderungsnachricht, die von einer Basisstation gesendet wurde, zu der die Quellzelle gehört; und
das Senden der Konfigurationsinformationen umfasst:
Senden einer Übergabeantwortnachricht an die Basisstation, zu der die Quellzelle gehört, wobei die Übergabeantwortnachricht die Konfigurationsinformationen enthält.

4. Verfahren nach Anspruch 1 oder 2, wobei die Quellzelle und die Zielzelle zur selben Basisstation gehören; und
Die Einleitung der Weiterleitung von einer Quellzelle zu einer Zielzelle umfasst:
Empfangen eines vom UE gesendeten Messergebnisses; und
Die Konfigurationsinformationen zum Senden umfassen:
Senden einer Nachricht, die die Konfigurationsinformationen an das UE ü bermittelt, wobei die Nachricht eine RRCReconfiguration-Nachricht (Radio Resource Control Reconfiguration) oder eine MAC-CE-Signalisierung (Media Access Control Signaling) umfasst.

5. Basisstation, umfassend:
einen Speicher, der so konfiguriert ist, dass er ein Programm speichert; und
einen oder mehrere Prozessoren, die so konfiguriert sind, dass sie das Programm ausführen, um das Weiterleitungsverfahren nach einem der Ansprüche 1 bis 4 zu implementieren.

6. Computerlesbares Speichermedium, das ein Programm speichert, wobei das Weiterleitungsverfahren nach einem der Ansprüche 1 bis 4 implementiert wird, wenn eine Basisstation das Programm ausführt.

## Revendications

1. Procédé de transfert intercellulaire, appliqué à une station de base à laquelle appartient une cellule cible effectuant une procédure de transfert, dans lequel le procédé comprend :
l'envoi (S106) d'informations de configuration en réponse au déclenchement du transfert d'un équipement utilisateur UE d'une cellule source vers la cellule cible, dans lequel les informations de configuration indiquent de transmettre un message de fin de transfert dans une procédure d'accès à la cellule cible ;
dans lequel les informations de configuration comprennent :
des informations de préambule d'accès aléatoire et des informations concernant une ressource pour transmettre les informations de préambule d'accès aléatoire, dans lequel
les informations de préambule d'accès aléatoire sont spécifiquement utilisées pour indiquer de transmettre le message de fin de transfert dans la procédure d'accès à la cellule cible ;
**caractérisé en ce qu'**avant l'envoi des informations de configuration, le procédé comprend en outre :
l'échange d'informations avec la station de base à laquelle appartient la cellule source, dans lequel les informations comprennent des informations de capacité ou des informations de configuration, et les informations de capacité ou les informations de configuration indiquent la prise en charge de la transmission du message de fin de transfert dans la procédure d'accès à la cellule cible ; ou
la détermination, dans une procédure de contrôle d'admission basée sur des informations de capacité de l'UE, que l'UE est autorisé à être transféré, où les informations de capacité indiquent la prise en charge de la transmission du message de fin de transfert dans la procédure d'accès à la cellule cible.

2. Procédé selon la revendication 1, dans lequel les informations de configuration comprennent :
des informations concernant une ressource de transmission en liaison montante pr éconfigurée ;
dans lequel les informations concernant la ressource de transmission en liaison montante comprennent :
un identifiant temporaire de réseau radio spécifiquement utilisé pour la transmission du message de fin de transfert dans la procédure d'accès à la cellule cible, des informations temps-fréquence utilisées pour la transmission en liaison montante, et des informations concernant un bloc de transport en liaison montante.

3. Procédé selon la revendication 1 ou 2, dans lequel le transfert d'une cellule source vers la cellule cible étant déclenché comprend :
la réception d'un message de demande de transfert envoyé par une station de base à laquelle appartient la cellule source ; et
l'envoi des informations de configuration comprend :
l'envoi d'un message de réponse de transfert à la station de base à laquelle appartient la cellule source, dans lequel le message de réponse de transfert transporte les informations de configuration.

4. Procédé selon la revendication 1 ou 2, dans lequel la cellule source et la cellule cible appartiennent à la même station de base ; et
le transfert d'une cellule source vers une cellule cible étant déclenché comprend :
la réception d'un résultat de mesure envoyé par l'UE ; et
les informations de configuration d'envoi comprennent :
l'envoi d'un message transportant les informations de configuration à l'UE, dans lequel le message comprend un message de reconfiguration de contrôle des ressources radio RRCReconfiguration ou une signalisation de contrôle d'accès au support MAC CE.

5. Une station de base comprenant :
une mémoire, configurée pour stocker un programme ; et
un ou plusieurs processeurs, configurés pour exécuter le programme afin de mettre en œuvre le procédé de transfert selon l'une quelconque des revendications 1 à 4.

6. Un support de stockage lisible par ordinateur, stockant un programme, où le procédé de transfert selon l'une quelconque des revendications 1 à 4 est mis en œuvre lorsqu'une station de base exécute le programme.
